# EUROPEAN PATENT APPLICATION

(11) **EP 4 841 932 A1**
(43) Date of publication of application: **18.11.2026**
(21) Application number: 26177588.6
(22) Date of filing: 08.05.2026
(51) Int. Cl.: H04L 9/08, H04B 10/70

(54) **QUANTUM POSITION VERIFICATION PROVER DEVICE WITH A NON-POLARIZING BEAM SPLITTER**

(30) Priority: 12.05.2025 US 202519204951
(71) Applicant: The Boeing Company, Arlington, VA 22202 (US)
(72) Inventor: MOHAGEG, Makan, Arlington, 22202 (US)
(74) Representative: Bugnion S.p.A. - US1

(57) **Abstract**

A quantum position verification (QPV) prover device includes a non-polarizing beam splitter (NPBS) positioned to receive a quantum encoded photon from a first QPV verification device, a fixed polarization rotator component positioned to receive the quantum encoded photon when the quantum encoded photon exits from a first output portion of the NPBS, a polarizing beam splitter (PBS) positioned to receive the quantum encoded photon when the quantum encoded photon exits from a second output portion of the NPBS, and a set of optical detectors positioned to detect the quantum encoded photon after propagation of the quantum encoded photon via at least one of the fixed polarization rotator component or the PBS.

## Description

### FIELD

The present disclosure relates generally to a quantum position verification (QPV) prover device and to a QPV prover device with a non-polarizing beam splitter (NPBS).

### BACKGROUND

QPV is a cryptographic protocol that uses quantum mechanics to verify a physical location of a QPV prover device.

### SUMMARY

An embodiment of the present disclosure provides a QPV prover device, comprising: an NPBS positioned to receive a quantum encoded photon from a first QPV verification device; a fixed polarization rotator component positioned to receive the quantum encoded photon when the quantum encoded photon exits from a first output portion of the NPBS; a polarizing beam splitter (PBS) positioned to receive the quantum encoded photon when the quantum encoded photon exits from a second output portion of the NPBS; and a set of optical detectors positioned to detect the quantum encoded photon after propagation of the quantum encoded photon via at least one of the fixed polarization rotator component or the PBS. In one example, the QPV prover device further comprises another PBS positioned to receive the quantum encoded photon when the quantum encoded photon exits from the fixed rotator component, wherein:
the set of optical detectors includes a first optical detector, a second optical detector, a third optical detector, and a fourth optical detector;
the first optical detector is positioned to receive the quantum encoded photon when the quantum encoded photon exits from a first output portion of the PBS;
the second optical detector is positioned to receive the quantum encoded photon when the quantum encoded photon exits from a second output portion of the PBS;
the third optical detector is positioned to receive the quantum encoded photon when the quantum encoded photon exits from a first output portion of the other PBS; and the fourth optical detector is positioned to receive the quantum encoded photon when the quantum encoded photon exits from a second output portion of the other PBS.

In one example, the QPV prover device further comprises a first reflector and a second reflector, wherein the first reflector is positioned to receive the quantum encoded photon when the quantum encoded photon exits from the fixed rotator component, the second reflector is positioned to receive the quantum encoded photon when the quantum encoded photon exits from the first reflector, the PBS is further positioned to receive the quantum encoded photon when the quantum encoded photon exits from the second reflector, the set of optical detectors includes a first optical detector and a second optical detector, the first optical detector is positioned to receive the quantum encoded photon when the quantum encoded photon exits from a first output portion of the PBS, and the second optical detector is positioned to receive the quantum encoded photon when the quantum encoded photon exits from a second output portion of the PBS.

In one example, the QPV prover device further comprises a first other PBS, a second other PBS, a first reflector, and a second reflector, wherein:
the first other PBS is positioned to receive the quantum encoded photon when the quantum encoded photon exits from the fixed rotator component;
the first reflector is positioned to receive the quantum encoded photon when the quantum encoded photon exits from a first output portion of the first other PBS;
the second reflector is positioned to receive the quantum encoded photon when the quantum encoded photon exits from the first reflector;
the second other PBS is positioned to receive the quantum encoded photon when the quantum encoded photon exits from the first other PBS or from the second reflector;
the PBS is further positioned to receive the quantum encoded photon when the quantum encoded photon exits from the second other PBS;
the set of optical detectors includes a first optical detector and a second optical detector;
the first optical detector is positioned to receive the quantum encoded photon when the quantum encoded photon exits from a first output portion of the PBS; and the second optical detector is positioned to receive the quantum encoded photon when the quantum encoded photon exits from a second output portion of the PBS.

In one example, the QPV prover device further comprises a processing component configured to:
obtain measurement setting information from a second QPV verification device;
obtain, after obtaining the measurement setting information, detector information from the set of optical detectors based on a particular optical detector, of the set of optical detectors, receiving the quantum encoded photon;
determine, based on the measurement setting information and the detector information, measurement information; and
transmit the measurement information to the first QPV verification device.

In one example, the measurement setting information identifies whether one of a pair of optical detectors, of the set of optical detectors, is expected to receive the quantum encoded photon, and the pair of optical detectors are positioned to receive the quantum encoded photon when the quantum encoded photon exits from respective output portions of the PBS or from respective output portions of the other.

In one example, the measurement setting information identifies whether the set of optical detectors is expected to receive the quantum encoded photon within a first time window or a second time window that follows the first time window.

In one example, the measurement setting information identifies whether the set of optical detectors are expected to receive the quantum encoded photon within a first time window or either one of a second time window that follows the first time window or a third time window that follows the second time window.

In one example, the measurement information indicates whether one of a pair of optical detectors, of the set of optical detectors, that is expected to receive the quantum encoded photon, as indicated by the measurement setting information, successfully received the quantum encoded photon.

In one example, the measurement information indicates whether the set of optical detectors received the quantum encoded photon within a time window indicated by the measurement setting information.

Another embodiment of the present disclosure provides a device, comprising: an NPBS positioned to receive a quantum encoded photon; a fixed polarization rotator component positioned to receive the quantum encoded photon from a first output portion of the NPBS; a PBS positioned to receive the quantum encoded photon from a second output portion of the NPBS; and a set of optical detectors positioned to detect the quantum encoded photon after propagation of the quantum encoded photon via at least one of the fixed polarization rotator component or the PBS.

In one example, the device further comprises another PBS positioned to receive the quantum encoded photon from the fixed rotator component, wherein:
the set of optical detectors includes a first pair of optical detectors and a second pair of optical detectors;
the first pair of optical detectors are each positioned to receive the quantum encoded photon from a respective output portion of the PBS; and
the second pair of optical detectors are each positioned to receive the quantum encoded photon from a respective output portion of the other PBS.

In one example, the device further comprises a set of reflectors or a waveguide, wherein:
the set of reflectors or the waveguide are positioned to receive the quantum encoded photon from the fixed rotator component;
the PBS is further positioned to receive the quantum encoded photon from the set of reflectors or the waveguide; and
a pair of optical detectors, of the set optical detectors, are each positioned to receive the quantum encoded photon from a respective output portion of the PBS.

In one example, the device further comprises a first other PBS, a second other PBS, and a set of reflectors or a waveguide, wherein:
the first other PBS is positioned to receive the quantum encoded photon from the fixed rotator component;
the set of reflectors or the waveguide are positioned to receive the quantum encoded photon from a first output portion of the first other PBS;
the second other PBS is positioned to receive the quantum encoded photon from the set of reflectors or the waveguide;
the PBS is further positioned to receive the quantum encoded photon from the second other PBS; and
a pair of optical detectors, of the set of optical detectors, are each positioned to receive the quantum encoded photon from a respective output portion of the PBS.

In one example, the device further comprises a processing component configured to:
obtain measurement setting information;
obtain, after obtaining the measurement setting information, detector information from the set of optical detectors based on the set of optical detectors detecting the quantum encoded photon;
determine, based on the measurement setting information and the detector information, measurement information; and
transmit the measurement information.

Yet a further embodiment of the present disclosure provides a method, comprising: obtaining, by a processing component of a QPV device, measurement setting information; obtaining, after obtaining the measurement setting information, detector information from a set of optical detectors of the QPV device and based on the set of optical detectors detecting a quantum encoded photon that is received by an NPBS of the QPV device and propagated to the set of optical detectors via at least one of a fixed polarization rotator component or a PBS of the QPV device; determining, based on the measurement setting information and the detector information, measurement information; and transmitting the measurement information.

In one example, the measurement setting information identifies whether a pair of optical detectors, of multiple pairs of optical detectors of the set of optical detectors, is expected to receive the quantum encoded photon.

In one example, the measurement setting information identifies whether the set of optical detectors is expected to receive the quantum encoded photon within a first time window or a second time window that follows the first time window.

In one example, the measurement information indicates whether a pair of optical detectors of multiple pairs of optical detectors of the set of optical detectors, that is expected to receive the quantum encoded photon, as indicated by the measurement setting information, successfully received the quantum encoded photon.

In one example, the measurement information indicates whether the set of optical detectors received the quantum encoded photon within a time window indicated by the measurement setting information.

The features, functions, and advantages described herein can be achieved independently in various implementations or can be combined in other implementations, further details of which are shown in the drawings and described below.

### BRIEF DESCRIPTION OF THE DRAWINGS

Figs. 1A-1B are diagrams of an example implementation associated with a QPV prover device with an NPBS.
Figs. 2A-2C are diagrams of an example implementation associated with a QPV prover device with an NPBS.
Figs. 3A-3C are diagrams of an example implementation associated with a QPV prover device with an NPBS.
Fig. 4 is a diagram of example components of a device associated with a QPV prover device with an NPBS.
Fig. 5 is a flowchart of an example process associated a QPV prover device with an NPBS.

### DETAILED DESCRIPTION

The following detailed description of example implementations refers to the accompanying drawings. The same reference numbers in different drawings identify the same or similar elements.

QPV is a protocol for verifying a device's physical location by transmitting quantum signals (e.g., quantum encoded photons) to the device. Since quantum information cannot be copied without detection, only a device physically located at a claimed location can correctly receive, process, and respond to the quantum signals within strict time constraints. This makes QPV an effective defense against location spoofing, preventing attackers from falsely claiming a legitimate device's position.

However, the effectiveness of QPV heavily depends on a speed at which the device can receive and process incoming quantum signals. The faster this operation, the more precise a locational verification. A significant challenge occurs when the device relies on mechanical components, such as a polarization rotator with physical switching mechanisms, to properly align and handle quantum-encoded photons. Since mechanical movements are orders of magnitude slower than quantum signal transmission, this delay significantly impacts the precision of the location verification.

As a result, a "zone of security," a physical region within which the device is proven to be located, can become large (e.g., on the order of kilometers). This reduced precision introduces a security risk, as a bad actor operating within this extended zone of security can spoof the device without being detected using QPV. Put another way, an inherent delay in mechanical processing undermines the security benefits of QPV, making it less effective in scenarios requiring high-precision location verification.

Some implementations described herein include a QPV prover device that utilizes a physical configuration of fixed components, which eliminates delays associated with mechanical movement of switching mechanisms. For example, the QPV prover device may include an NPBS positioned to receive a quantum encoded photon from a first QPV verification device, a fixed polarization rotator component positioned to receive the quantum encoded photon when the quantum encoded photon exits from a first output portion of the NPBS, a PBS positioned to receive the quantum encoded photon when the quantum encoded photon exits from a second output portion of the NPBS, and a set of optical detectors positioned to detect the quantum encoded photon after propagation of the quantum encoded photon via at least one of the fixed polarization rotator component or the PBS. Because each component is fixed, physical switching mechanisms are not required, such as for the polarization rotator component, to receive and detect the quantum encoded photon transmitted by the first QPV verification device. Accordingly, the QPV prover device can include a processing component to process (e.g., in real-time, or near real-time) detector information (that is generated by the set of optical detectors upon detection of the quantum encoded photon) to generate measurement information that the QPV prover device provides to the first QPV verification device to verify the physical location of the QPV prover device.

By removing a need for mechanical repositioning, the QPV prover device can process quantum information more rapidly, enabling the QPV prover device to prove the physical location of the QPV prover device with greater precision. For example, instead of waiting for physical components to adjust, the processing component of a QPV device only needs to handle incoming information, such as detector information and measurement setting information from a second QPV verification device, to generate the measurement information (e.g., in real-time, or near real-time).

By reducing an amount of time required to process quantum signals and generate measurement information, a locational accuracy of the QPV prover device is significantly improved. This, in turn, decreases a zone of security of the QPV prover device, reducing the zone from potentially large sizes (e.g., kilometers, as seen with mechanically constrained devices) to a much smaller range, on the order of meters. A smaller zone of security enhances overall network security by minimizing a risk that a bad actor device can operate undetected within a verified area, thereby strengthening a reliability of QPV-based location authentication.

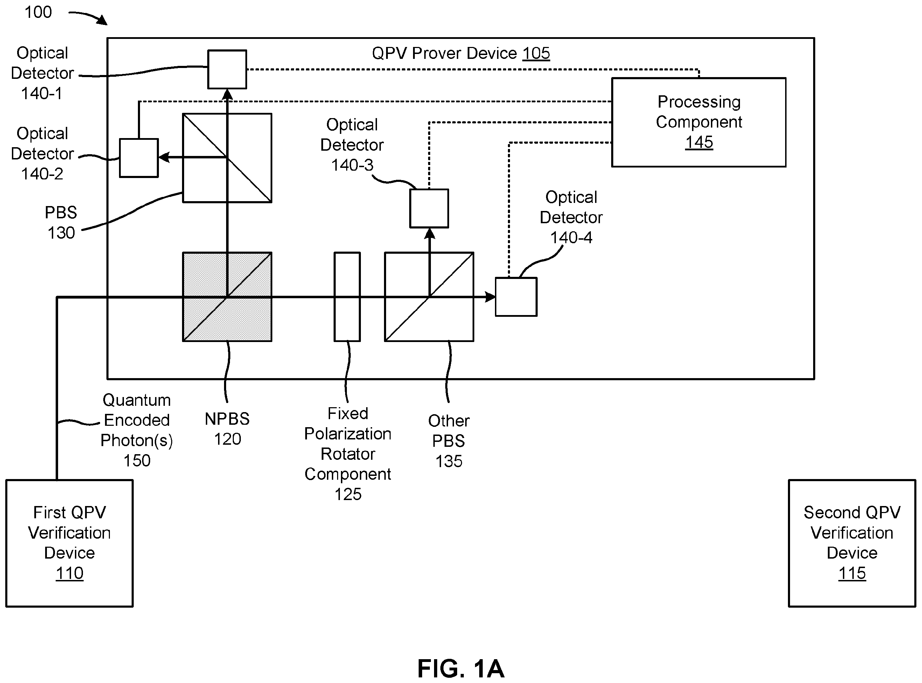

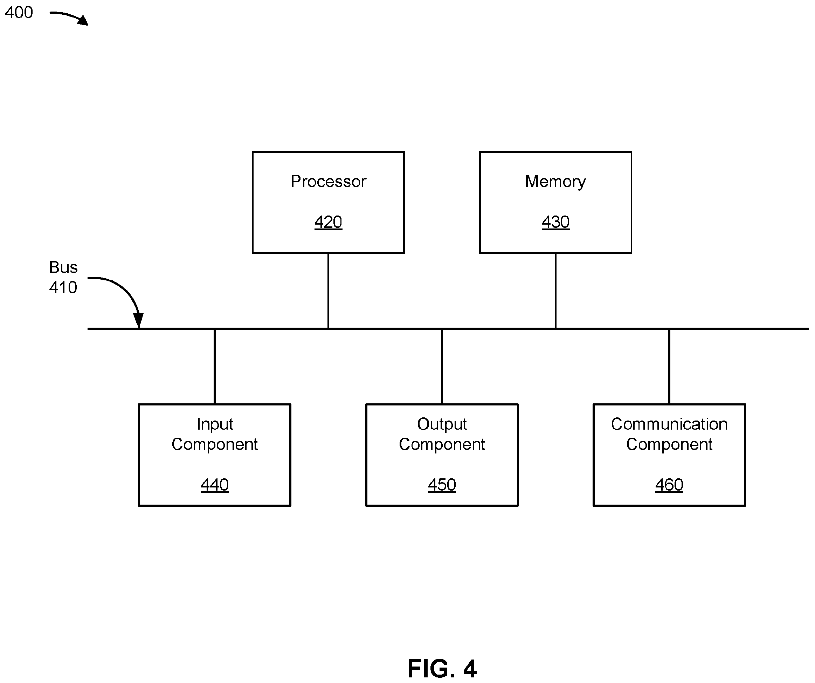

Figs. 1A-1B are diagrams of an example implementation 100 associated with a QPV prover device with an NPBS 120. As shown in Figs. 1A-1B, example implementation 100 includes a QPV prover device 105, a first QPV verification device 110, and a second QPV verification device 115, components of which are described in more detail below in connection with Fig. 4. As further shown in Figs. 1A-1B, the QPV prover device 105 includes an NPBS 120, a fixed polarization rotator component 125, a PBS 130, another PBS 135, a set of optical detectors 140 (shown as optical detectors 140-1 through 140-4), and a processing component 145.

Each of the QPV prover device 105, the first QPV verification device 110, and the second QPV verification device 115 includes one or more devices capable of receiving, processing, storing, routing, and/or providing classical information (e.g., non-quantum information), such as in a manner described herein. For example, the QPV prover device 105, the first QPV verification device 110, and the second QPV verification device 115 may include a router, such as a label switching router (LSR), a label edge router (LER), an ingress router, an egress router, a provider router (e.g., a provider edge router or a provider core router), a virtual router, or another type of router. Additionally, or alternatively, each of the QPV prover device 105, the first QPV verification device 110, and the second QPV verification device 115 may include a gateway, a switch, a firewall, a hub, a bridge, a reverse proxy, a server (e.g., a proxy server, a cloud server, or a data center server), a load balancer, and/or a similar device.

The QPV prover device 105 and the first QPV verification device 110, and optionally the second QPV verification device 115, also include one or more devices capable of receiving, processing, storing, routing, and/or providing quantum information (e.g., non-classical information), such as in a manner described herein. For example, the first QPV verification device 110 may include a quantum source, such as single-photon source, one or more quantum state preparation components (e.g., for preparing specific polarizations of a photon, which results in a quantum encoded photon), and an optical transmission system (e.g., a fiber-optic optical transmission system or a free-space optical transmission system to direct the quantum encoded photon to the QPV prover device 105). As another example, the QPV prover device 105 may include an optical reception system (e.g., a fiber-optic optical reception system or a free-space optical reception system to receive a quantum encoded photon) and one or more other optical components to relay, detect, and measure the quantum encoded photon, as further described herein. The QPV prover device 105, the first QPV verification device 110, and the second QPV verification device 115 are spatially separated and thus may perform one or more operations described herein to enable the QPV prover device 105 to prove a physical location of the QPV prover device 105.

The NPBS 120 is positioned (e.g., within the QPV prover device 105) to receive a quantum encoded photon 150 from the first QPV verification device 110. For example, as shown in Figs. 1A-1B, the NPBS 120 may be positioned at an input region of the QPV prover device 105 to receive (e.g., directly receive) the quantum encoded photon 150 at a left input portion of the NPBS 120 from the first QPV verification device 110. The first QPV verification device 110 may transmit the quantum encoded photon 150 to the QPV prover device 105 to facilitate the QPV prover device 105 proving the physical location of the QPV prover device 105, as further described herein.

The NPBS 120 is configured to direct (e.g., transmit or reflect, along with other examples) light (e.g., comprising one or more photons) while maintaining a polarization of the light. Accordingly, the NPBS 120 may include at least one of an NPBS cube, an NPBS wire, an NPBS plate, an NPBS fiber, a directional coupler, a prism, a grating, or another type of optical component that is configured to direct light while maintaining a polarization of the light. The NPBS 120 may be configured to direct the quantum encoded photon 150 to exit from a particular output portion of the NPBS 120. For example, as shown in Figs. 1A-1B, the NPBS 120 may direct the quantum encoded photon 150 to exit from one of a first output portion (e.g., a right output portion) of the NPBS 120 or a second output portion (e.g., a top output portion) of the NPBS 120.

The fixed polarization rotator component 125 is positioned (e.g., within the QPV prover device 105) to receive the quantum encoded photon 150 when the quantum encoded photon 150 exits from the first output portion of the NPBS 120. For example, as shown in Figs. 1A-1B, the fixed polarization rotator component 125 is positioned to receive the quantum encoded photon 150 at a left input portion of the fixed polarization rotator component 125 when the quantum encoded photon 150 exits from the right output portion of the NPBS 120. The fixed polarization rotator component 125 is configured to rotate a plane of polarization of light (e.g., comprising one or more photons) that transmits through the fixed polarization rotator component 125. Accordingly, the fixed polarization rotator component 125 may include at least one of a polarization rotator plate (e.g., a half-wave plate, a quarter-wave plate, or another type or rotation plate), a magneto-optic polarization rotator, an optical activity polarization rotator, or another type of optical component that is configured to rotate a plane of polarization of light. The fixed polarization rotator component 125 may be configured to rotate a plane of polarization of the quantum encoded photon 150 (e.g., from a horizontal (H)-polarization to a diagonal (D)-polarization or a vertical (V)-polarization to a anti-diagonal (A)-polarization, along with other examples) when the quantum encoded photon 150 propagates through the fixed polarization rotator component 125. The fixed polarization rotator component 125 then may direct the quantum encoded photon 150 to exit from an output portion (e.g., a right output portion) of the fixed polarization rotator component 125.

The fixed polarization rotator component 125 is "fixed" in that it is not designed to move, tilt, bend, or perform any other action that alters the position (e.g., the stationary position) of the fixed polarization rotator component 125. For example, the fixed polarization rotator component 125 may not include, or may not be connected to, any type of component that would otherwise enable adjustment of the position of the fixed polarization rotator component 125.

The PBS 130 is positioned (e.g., within the QPV prover device 105) to receive the quantum encoded photon 150 when the quantum encoded photon 150 exits from the second output portion of the NPBS 120. For example, as shown in Figs. 1A-1B, the PBS 130 is positioned to receive the quantum encoded photon 150 at a bottom input portion of the PBS 130 when the quantum encoded photon 150 exits from the top output portion of the NPBS 120.

The PBS 130 is configured to direct (e.g., transmit or reflect, along with other examples) light (e.g., comprising one or more photons) based on a polarization of the light. Accordingly, the PBS 130 may include at least one of a PBS cube, a PBS wire, a PBS plate, a PBS fiber, a directional coupler, a prism, a grating, or another type of optical component that is configured to direct light based on the polarization of the light. The PBS 130 may be configured to direct the quantum encoded photon 150 to exit from a particular output portion of the PBS 130. For example, as shown in Figs. 1A-1B, the PBS 130 may direct the quantum encoded photon 150 to exit from one of a first output portion (e.g., a top output portion) of the PBS 130 or a second output portion (e.g., a left output portion) of the PBS 130, such as based on whether the quantum encoded photon 150 has an H-polarization or a V-polarization.

The other PBS 135 is positioned (e.g., within the QPV prover device 105) to receive the quantum encoded photon 150 when the quantum encoded photon 150 exits from the output portion of the fixed polarization rotator component 125. For example, as shown in Figs. 1A-1B, the other PBS 135 is positioned to receive the quantum encoded photon 150 (e.g., at a left input portion of the other PBS 135) when the quantum encoded photon 150 exits from the right output portion of the fixed polarization rotator component 125.

The other PBS 135 is configured to direct (e.g., transmit or reflect, along with other examples) light (e.g., comprising one or more photons) based on a polarization of the light. Accordingly, the other PBS 135 may include at least one of a PBS cube, a PBS wire, a PBS plate, a PBS fiber, a directional coupler, a prism, a grating, or another type of optical component that is configured to direct light based on the polarization of the light. The other PBS 135 may be configured to direct the quantum encoded photon 150 to exit from a particular output portion of the other PBS 135. For example, as shown in Figs. 1A-1B, the other PBS 135 may direct the quantum encoded photon 150 to exit from one of a first output portion (e.g., a top output portion) of the other PBS 135 or a second output portion (e.g., a right output portion) of the other PBS 135, such as based on whether the quantum encoded photon 150 (e.g., as rotated by the fixed polarization rotator component 125) has an H-polarization or a V-polarization.

The set of optical detectors 140 are positioned to detect the quantum encoded photon 150 after propagation of the quantum encoded photon 150 via the fixed polarization rotator component 125 or the PBS 130. For example, the set of optical detectors 140 may include a first optical detector 140-1, a second optical detector 140-2, a third optical detector 140-3, and a fourth optical detector 140-4. As shown in Figs. 1A-1B, the first optical detector 140-1 is positioned to receive the quantum encoded photon 150 when the quantum encoded photon 150 exits from a first output portion (e.g., a top output portion) of the PBS 130, the second optical detector 140-2 is positioned to receive the quantum encoded photon 150 when the quantum encoded photon 150 exits from a second output portion (e.g., a left output portion) of the PBS 130, the third optical detector 140-3 is positioned to receive the quantum encoded photon 150 when the quantum encoded photon 150 exits from a first output portion (e.g., a top output portion) of the other PBS 135, and the fourth optical detector 140-4 is positioned to receive the quantum encoded photon 150 when the quantum encoded photon 150 exits from a second output portion (e.g., a right output portion) of the other PBS 135.

Each optical detector 140 is configured to detect light (e.g., comprising one or more photons), and, in some implementations, is configured to detect single photons. Accordingly, each optical detector 140 may include at least one of a single-photon avalanche diode (SPAD), a superconducting nanowire single-photon detector (SNSPD), a photomultiplier tube (PMT), a hybrid photomultiplier detector (HPD), or another type of optical component that is configured to detect a photon when the photon impinges on the optical component. For example, each optical detector 140 may be configured to detect the quantum encoded photon 150 when the quantum encoded photon 150 impinges on the optical detector 140. Each optical detector 140 may have a timing resolution in a nanosecond range or a picosecond range.

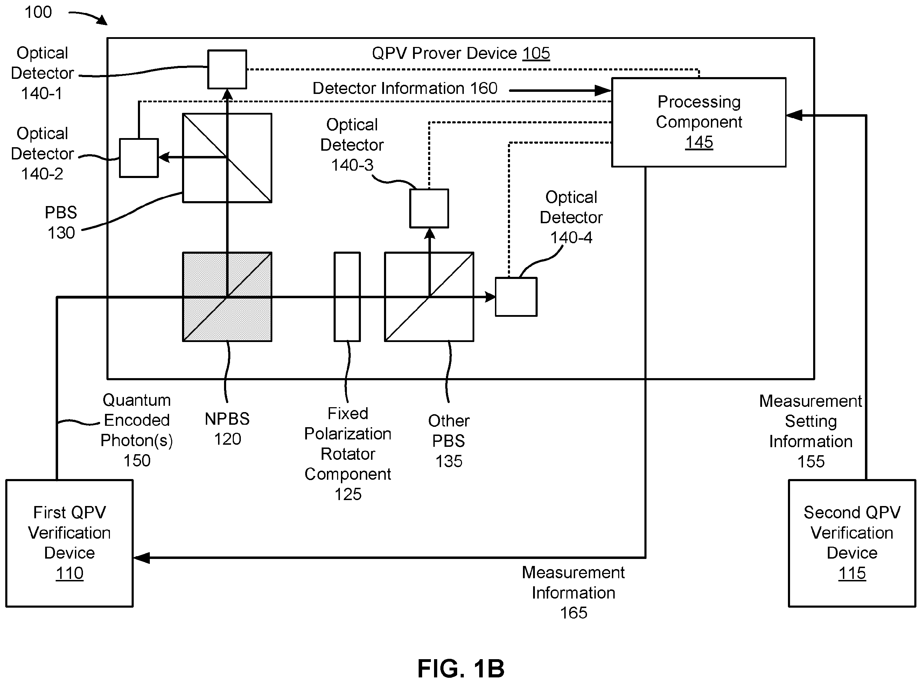

As shown in Figs. 1A-1B, the processing component 145 is communicatively coupled to the set of optical detectors 140 and thus is configured to obtain information from the set of optical detectors 140. The processing component 145 is also configured to enable communication (e.g., via classical communication) between the QPV prover device 105 and each of the first QPV verification device 110 and the second QPV verification device 115. As shown in Fig 1B, and by reference number 155, the QPV prover device 105 (e.g., using the processing component 145) obtains measurement setting information, such as from the second QPV verification device 115. The QPV prover device 105 may obtain the measurement setting information 155 from the second QPV verification device 115 via classical communication (e.g., non-quantum communication). For example, the second QPV verification device 115 may transmit the measurement setting information to the QPV prover device 105 and the QPV prover device 105 may therefore receive the measurement setting information 155 from the second QPV verification device 115. In some implementations, the QPV prover device 105 may obtain the measurement setting information 155 before the quantum encoded photon 150 is received by the QPV prover device 105 (e.g., via the NPBS 120). Alternatively, the QPV prover device 105 may obtain the measurement setting information 155 after the quantum encoded photon 150 is received by the QPV prover device 105.

The measurement setting information 155 may identify, for example, whether a pair of optical detectors 140, of the set of optical detectors 140 (e.g., of multiple pairs of optical detectors of the set of optical detectors 140), is expected to receive the quantum encoded photon 150. For example, the measurement setting information 155 may identify whether a first pair of optical detectors 140 (e.g., that includes first optical detector 140-1 and second optical detector 140-2) or a second pair of optical detectors140 (e.g., that includes third optical detector 140-3 and fourth optical detector 140-4) is expected to receive the quantum encoded photon 150. Additionally, or alternatively, the measurement setting information 155 may identify whether one optical detector 140 (e.g., one particular optical detector 140), of a pair of optical detectors 140 (e.g., that are positioned to receive the quantum encoded photon 150 when the quantum encoded photon exits from respective output portions of the PBS 130 or from respective output portions of the other PBS 135), is expected to receive the quantum encoded photon 150. For example, the measurement setting information 155 may identify whether the first optical detector 140-1 or the second optical detector 140-2 (e.g., of the first pair of optical detectors 140) is expected to receive the quantum encoded photon 150, or whether the third optical detector 140-3 or the fourth optical detector 140-4 (e.g., of the second pair of optical detectors 140) is expected to receive the quantum encoded photon 150.

As shown by reference number 160, the QPV prover device 105 (e.g., using the processing component 145) may obtain detector information. The QPV prover device 105 may obtain the detector information 160 from the set of optical detectors 140 (e.g., based on a particular optical detector 140, of the set of optical detectors 140, receiving the quantum encoded photon 150). For example, when a particular optical detector 140 detects the quantum encoded photon 150 (e.g., after propagation of the quantum encoded photon 150 to the particular optical detector 140 via at least one of the fixed polarization rotator component 125 or the PBS 135), the particular optical detector 140 may send the detector information 160 to the processing component 145. The QPV prover device 105 may obtain the detector information 160 prior to the QPV prover device 105 obtaining the measurement setting information 155, or after the QPV prover device 105 obtains the measurement setting information 155.

In some implementations, the detector information 160 indicates which optical detector 140, of the set of optical detectors 140, received (e.g., detected) the quantum encoded photon 150. For example, with respect to what is shown in Fig. 1B, the detector information 160 may indicate that the first optical detector 140-1, the second optical detector 140-2, the third optical detector 140-3, or the fourth optical detector 140-4 received the quantum encoded photon 150.

As shown by reference number 165, the QPV prover device 105 (e.g., using the processing component 145) may determine measurement information. The QPV prover device 105 may determine the measurement information 165 based on the measurement setting information 155 and the detector information 160. In some implementations, the QPV prover device 105 may determine, and therefore may cause the measurement information 165 to indicate, whether a pair of optical detectors 140, of the set of optical detectors 140 (e.g., of multiple pairs of optical detectors of the set of optical detectors 140), that is expected to receive the quantum encoded photon 150 (e.g., as indicated by the measurement setting information 155) successfully received the quantum encoded photon 150 (e.g., as indicated by the detector information 160). For example, the QPV prover device 105 may determine, and the measurement information 165 may therefore indicate, whether the first pair of optical detectors 140 (e.g., that includes first optical detector 140-1 and second optical detector 140-2) or the second pair of optical detectors 140 (e.g., that includes third optical detector 140-3 and fourth optical detector 140-4) successfully received the quantum encoded photon 150 (e.g., as expected).

Additionally, or alternatively, the QPV prover device 105 may determine, and therefore may cause the measurement information 165 to indicate, whether one optical detector 140 (e.g., one particular optical detector 140), of a pair of optical detectors 140, of the set of optical detectors 140, that is expected to receive the quantum encoded photon 150 (e.g., as indicated by the measurement setting information 155) successfully received the quantum encoded photon 150. For example, the QPV prover device 105 may determine, and the measurement information 165 may therefore indicate, whether the first optical detector 140-1 or the second optical detector 140-2 (e.g., of the first pair of optical detectors 140) successfully received the quantum encoded photon 150 (e.g., as expected), or whether the third optical detector 140-3 or the fourth optical detector 140-4 (e.g., of the second pair of optical detectors 140) successfully received the quantum encoded photon 150 (e.g., as expected).

As further shown by reference number 165, the QPV prover device 105 (e.g., using the processing component 145) transmits the measurement information, such as to the first QPV verification device 110. The QPV prover device 105 may transmit the measurement information 165 to the first QPV verification device 110 via classical communication (e.g., non-quantum communication). In this way, the first QPV verification device 110 may receive the measurement information 165 from the QPV prover device 105. While description related to Figs. 1A-1B is directed to propagation of a single quantum encoded photon 150 from the first QPV verification device 110 to the set of optical detectors 140 of the QPV prover device 105, the description is applicable to propagation of multiple quantum encoded photons 150 from the first QPV verification device 110 to the set of optical detectors 140 of the QPV prover device 105. Accordingly, in a similar manner as that described herein in relation to Figs 1A-1B, the QPV prover device 105 may obtain measurement setting information 155 and detector information 160 that corresponds to each quantum encoded photon 150 and may determine and transmit measurement information 165 that corresponds to each quantum encoded photon 150. Accordingly, the first QPV verification device 110 may obtain a sufficient amount of information (e.g., a sufficient amount of measurement information 165) to determine (e.g., accurately determine) a physical location of the QPV prover device 105.

As indicated above, Figs. 1A-1B are provided as an example. Other examples may differ from what is described with regard to Figs. 1A-1B.

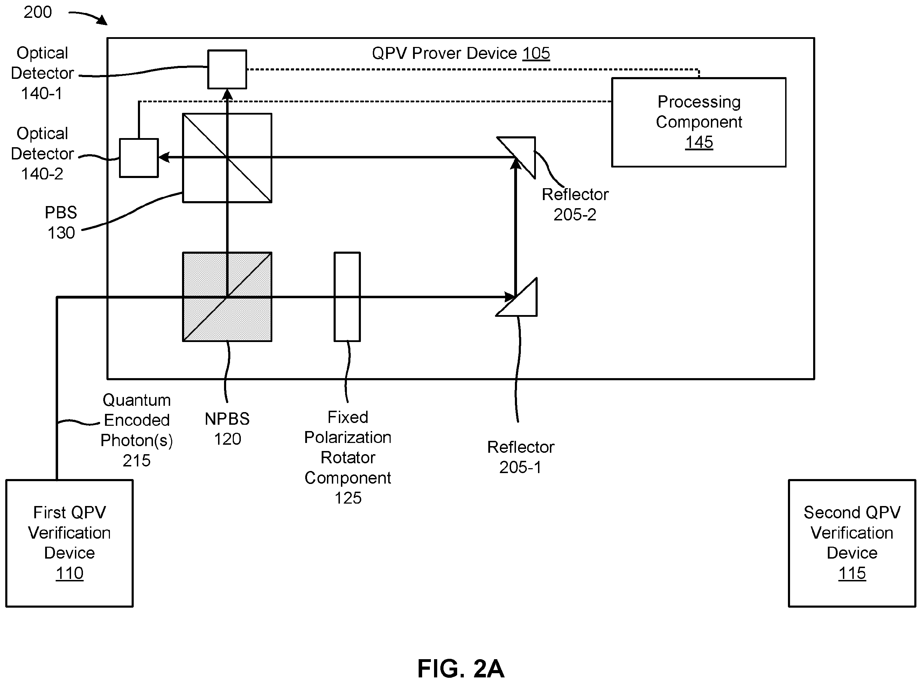

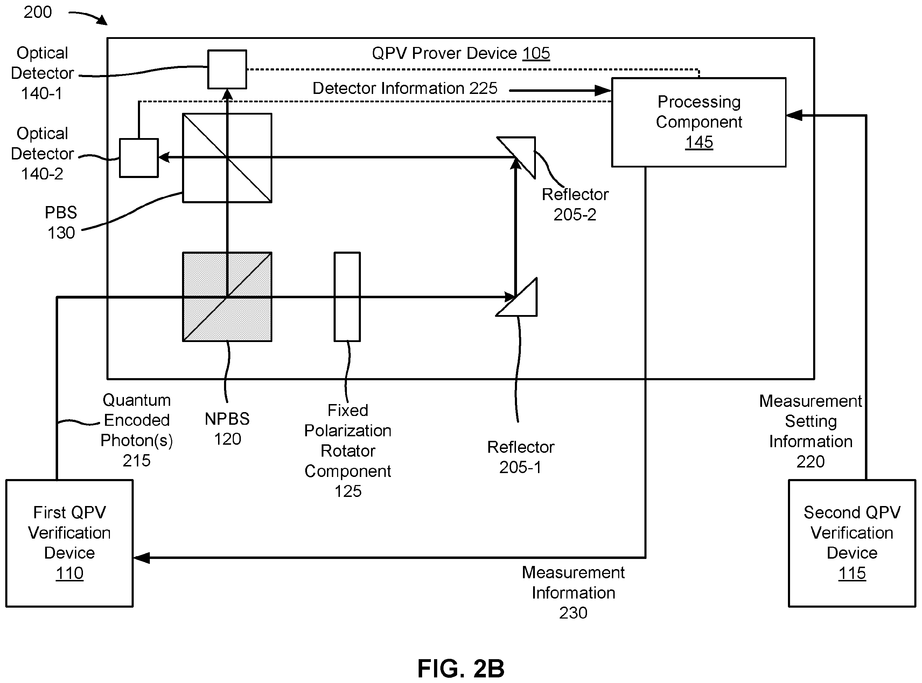

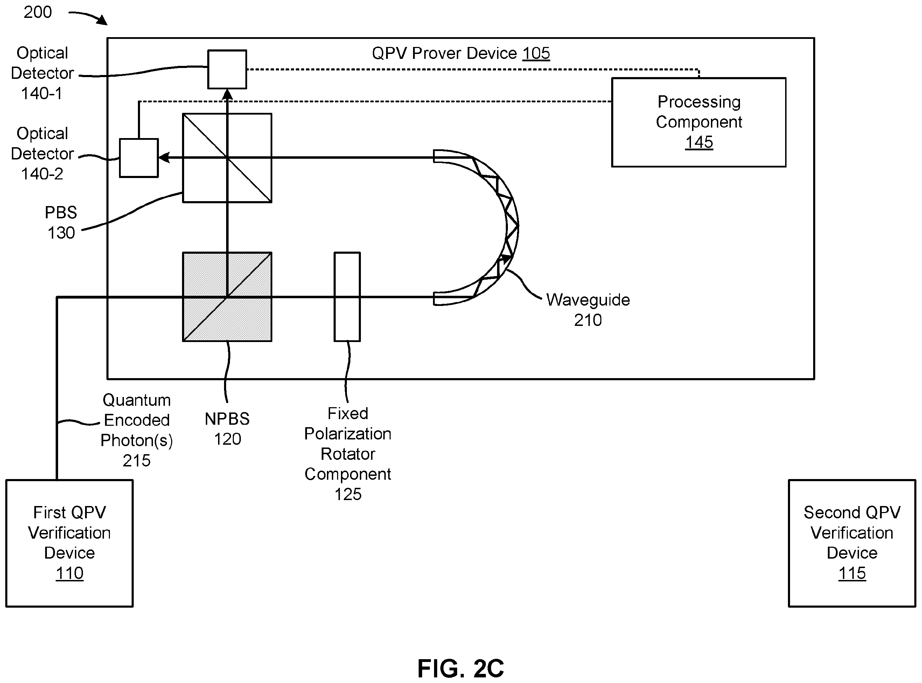

Figs. 2A-2C are diagrams of an example implementation 200 associated with a QPV prover device 105 with an NPBS 120. As shown in Figs. 2A-2C, example implementation 200 includes the QPV prover device 105, the first QPV verification device 110, and the second QPV verification device 115. As further shown in Figs. 2A-2C, the QPV prover device includes the NPBS 120, the fixed polarization rotator component 125, the PBS 130, and the set of optical detectors 140 (shown as optical detectors 140-1 and 140-2), and the processing component 145, which are configured in a same or similar manner as that described herein in relation to Figs. 1A-1B. As shown in Figs. 2A and 2B, the QPV prover device 105 may further include a set of reflectors 205 (shown as reflectors 205-1 and 205-2), and therefore may not include the other PBS 135. Fig. 2C shows another configuration where the QPV prover device 105 includes a waveguide 210 (instead of the set of reflectors 205).

In a same or similar manner as that described herein in relation to Figs. 1A-1B, the NPBS 120 is positioned and configured to receive a quantum encoded photon 215 and to direct the quantum encoded photon 215 to exit from a particular output portion of the NPBS 120, such as from a first output portion (e.g., a right output portion) or a second output portion (e.g., a top output portion) of the NPBS 120; the fixed polarization rotator component 125 is positioned and configured to receive the quantum encoded photon 215 when the quantum encoded photon 215 exits from the first output portion of the NPBS 120, to rotate a plane of polarization of the quantum encoded photon 215, and to direct the quantum encoded photon 215 to exit from an output portion (e.g., a right output portion) of the fixed polarization rotator component 125; and the PBS 130 is positioned and configured to receive the quantum encoded photon 215 when the quantum encoded photon 215 exits from the second output portion of the NPBS 120 and to direct the quantum encoded photon 215 to exit from a particular output portion of the NPBS 120, such as a first output portion (e.g., a top output portion) or a second output portion (e.g., a left output portion) of the PBS 130.

As shown in Figs. 2A-2B, the set of reflectors 205 may be positioned (e.g., within the QPV prover device 105) to receive the quantum encoded photon 215 when the quantum encoded photon 215 exits from the output portion of the fixed polarization rotator component 125 and to direct the quantum encoded photon 215 to the PBS 130. For example, as shown in Figs. 2A-2B, the set of reflectors 205 may include a first reflector 205-1 and a second reflector 205-2. The first reflector 205-1 is positioned to receive the quantum encoded photon 215 at an input portion of first reflector 205-1 when the quantum encoded photon 215 exits from the output portion of the fixed polarization rotator component 125 and to direct (e.g., via reflection) the quantum encoded photon 215 to exit from an output portion of the first reflector 205-1, such as to the second reflector 205-2. The second reflector 205-2 is positioned to receive the quantum encoded photon 215 at an input portion of the second reflector 205-2 when the quantum encoded photon 215 exits from output portion of the first reflector 205-1 and to direct (e.g., via reflection) the quantum encoded photon 215 to exit from an output portion of the second reflector 205-2, such as to the PBS 130. Accordingly, each reflector 205 of the set of reflectors 205 may include a mirror or another type of optical component that is configured to reflect light (e.g., that comprises one or more photons). Alternatively, as shown in Fig. 2C, the waveguide 210 may be positioned (e.g., within the QPV prover device 105) to receive the quantum encoded photon 215 when the quantum encoded photon 215 exits from the output portion of the fixed polarization rotator component 125 and to direct the quantum encoded photon 215 to the PBS 130. For example, as shown in Figs. 2C, the waveguide 210 is positioned to receive the quantum encoded photon 215 at an input portion of the waveguide 210 when the quantum encoded photon 215 exits from the output portion of the fixed polarization rotator component 125 and to propagate and direct (e.g., via reflection within the waveguide) the quantum encoded photon 215 to exit from an output portion of the waveguide 210, such as to the PBS 130. Accordingly, the waveguide 210 may include an optical fiber waveguide, a planar photonic waveguide, a superconducting waveguide, or another type of optical component that is configured to propagate and direct light (e.g., that comprises one or more photons).

Accordingly, the PBS 130 may be further positioned (e.g., within the QPV prover device 105) to receive the quantum encoded photon 215 when the quantum encoded photon 215 exits from the set of reflectors 205 or from the waveguide 210. For example, as shown in Figs. 2A-2C, the PBS 130 may be further positioned to receive the quantum encoded photon 215 at a right input portion of the PBS 130 when the quantum encoded photon 215 exits from the output portion of the second reflector 205-2 or from the output portion of the waveguide 210.

As described elsewhere herein, the PBS 130 is configured to direct (e.g., transmit or reflect, along with other examples) light (e.g., comprising one or more photons) based on a polarization of the light. Accordingly, the PBS 130, regardless of whether the PBS received the quantum encoded photon 215 via the bottom input portion of the PBS 130 or the right input portion of the PBS 130, is configured to direct the quantum encoded photon 215 to exit from a particular output portion of the PBS 130. For example, as shown in Figs. 2A-2C, the PBS 130 may direct the quantum encoded photon 215 to exit from one of the first output portion (e.g., the top output portion) of the PBS 130 or the second output portion (e.g., the left output portion) of the PBS 130, such as based on whether the quantum encoded photon 215 has an H-polarization or a V-polarization.

As described elsewhere herein, the set of optical detectors 140 are positioned to detect the quantum encoded photon 215 after propagation of the quantum encoded photon 215 via the fixed polarization rotator component 125 or the PBS 130. For example, the set of optical detectors 140 may include a first optical detector 140-1 and a second optical detector 140-2, where the first optical detector 140-1 is positioned to receive the quantum encoded photon 215 when the quantum encoded photon 215 exits from the first output portion (e.g., the top output portion) of the PBS 130, the second optical detector 140-2 is positioned to receive the quantum encoded photon 215 when the quantum encoded photon 215 exits from the second output portion (e.g., a left output portion) of the PBS 130.

As described elsewhere herein, each optical detector 140 is configured to detect light (e.g., comprising one or more photons), and, in some implementations, is configured to detect single photons. For example, each optical detector 140 may be configured to detect the quantum encoded photon 215 when the quantum encoded photon 215 impinges on the optical detector 140.

As shown in Fig 2B, and by reference number 220, the QPV prover device 105 (e.g., using the processing component 145) obtains measurement setting information, such as from the second QPV verification device 115 (e.g., in a similar manner as that described herein in relation to Fig. 1B and reference number 155).

The measurement setting information 220 may identify whether the set of optical detectors 140 is expected to receive the quantum encoded photon 215 within a first time window or a second time window that follows the first time window. The first time window may be associated with propagation of the quantum encoded photon 215 via the NPBS 120 and the PBS 130 (e.g., directly, without propagation via the fixed polarization rotator component 125, and one of the set of reflectors 205 or the waveguide 210). The second time window may be associated with propagation of the quantum encoded photon 215 via the NPBS 120, the fixed polarization rotator component 125, one of the set of reflectors 205 or the waveguide 210, and the PBS 130. Put differently, the measurement setting information 220may identify whether the set of optical detectors 140 is expected to receive the quantum encoded photon 215 within a first time window associated with a non-time-delayed path within the QPV prover device 105 or a second time window associated with a time-delayed path within the QPV prover device 105. Additionally, or alternatively, the measurement setting information 220 may identify whether one optical detector 140 (e.g., one particular optical detector 140), of the set of optical detectors 140, is expected to receive the quantum encoded photon 215. For example, the measurement setting information 220 may identify whether the first optical detector 140-1 or the second optical detector 140-2 is expected to receive the quantum encoded photon 215 (e.g., within the first time window or the second time window).

As shown by reference number 225, the QPV prover device 105 (e.g., using the processing component 145) may obtain detector information (e.g., in a similar manner as that described herein in relation to Fig. 1B and reference number 160). The detector information 225 indicates which optical detector 140, of the set of optical detectors 140, received (e.g., detected) the quantum encoded photon 215 and a time of reception. For example, with respect to what is shown in Fig. 2B, the detector information 225 may indicate that the first optical detector 140-1 or the second optical detector 140-2 received the quantum encoded photon 215 and a time of reception.

As shown by reference number 230, the QPV prover device 105 (e.g., using the processing component 145) may determine measurement information (e.g., in a similar manner as that described herein in relation to Fig. 1B and reference number 165). The QPV prover device 105 may determine the measurement information 230 based on the measurement setting information 220 and the detector information 225. In some implementations, the QPV prover device 105 may determine, and therefore may cause the measurement information 230 to indicate, whether the set of optical detectors 140 received the quantum encoded photon 215 (e.g., as indicated by the detector information 225) within a time window (e.g., that is indicated by the measurement setting information 220). For example, the QPV prover device 105 may determine, and therefore may cause the measurement information 230 to indicate, whether the first optical detector 140-1 and the second optical detector 140-2 received the quantum encoded photon 215 within a time window (e.g., the first time window or the second time window) indicated by the measurement setting information 220.

Additionally, or alternatively, the QPV prover device 105 may determine, and therefore may cause the measurement information 230 to indicate, whether one optical detector 140 (e.g., one particular optical detector 140), of the set of optical detectors 140, that is expected to receive the quantum encoded photon 215 (e.g., as indicated by the measurement setting information 220) successfully received the quantum encoded photon 215 (e.g., within a time window indicated by the measurement setting information 220). For example, the QPV prover device 105 may determine, and therefore may cause the measurement information 230 to indicate, whether the first optical detector 140-1 or the second optical detector 140-2 successfully received the quantum encoded photon 215 (e.g., as expected) within an expected time window.

As further shown by reference number 230, the QPV prover device 105 (e.g., using the processing component 145) transmits the measurement information, such as to the first QPV verification device 110 (e.g., in a similar manner as that described herein in relation to Fig. 1B and reference number 165).

While description related to Figs. 2A-2C is directed to propagation of a single quantum encoded photon 215 from the first QPV verification device 110 to the set of optical detectors 140 of the QPV prover device 105, the description is applicable to propagation of multiple quantum encoded photons 215 from the first QPV verification device 110 to the set of optical detectors 140 of the QPV prover device 105. Accordingly, in a similar manner as that described herein in relation to Figs 2A-2C, the QPV prover device 105 may obtain measurement setting information 220 and detector information 225 that corresponds to each quantum encoded photon 215 and may determine and transmit measurement information 230 that corresponds to each quantum encoded photon 215. Accordingly, the first QPV verification device 110 may obtain a sufficient amount of information (e.g., a sufficient amount of measurement information 230) to determine (e.g., accurately determine) a physical location of the QPV prover device 105.

As indicated above, Figs. 2A-2C are provided as an example. Other examples may differ from what is described with regard to Figs. 2A-2C.

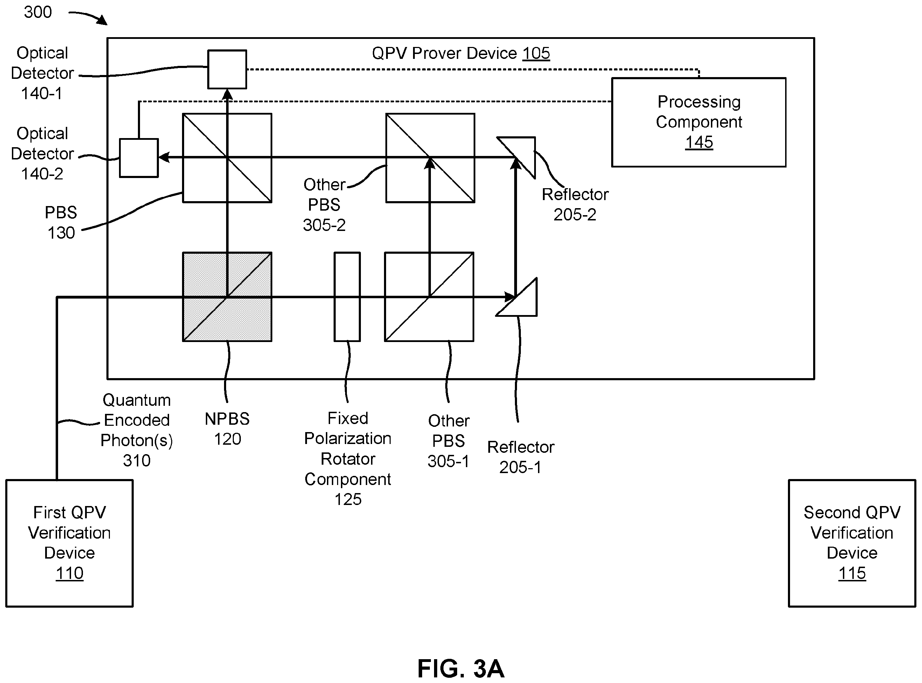

Figs. 3A-3C are diagrams of an example implementation 300 associated with a QPV prover device with an NPBS 120. As shown in Figs. 3A-3C, example implementation 300 includes the QPV prover device 105, the first QPV verification device 110, and the second QPV verification device 115. As further shown in Figs. 3A-3C, the QPV prover device 105 includes the NPBS 120, the fixed polarization rotator component 125, the PBS 130, and the set of optical detectors 140 (shown as optical detectors 140-1 and 140-2), the processing component 145, and the set of reflectors 205 (shown as reflectors 205-1 and 205-2) or the waveguide 210, which are configured in a same or similar manner as that described herein in relation to Figs. 1A-1B and 2A-2C. As shown in Figs. 3A-3C, the QPV prover device 105 may further include a set of other PBSs (shown as a first other PBS 405-1 and a second other PBS 405-2).

In a same or similar manner as that described herein in relation to Figs. 1A-1B, the NPBS 120 is positioned and configured to receive a quantum encoded photon 310 and to direct the quantum encoded photon 310 to exit from a particular output portion of the NPBS 120, such as a first output portion (e.g., a right output portion) or a second output portion (e.g., a top output portion) of the NPBS 120; the fixed polarization rotator component 125 is positioned and configured to receive the quantum encoded photon 310 when the quantum encoded photon 310 exits from the first output portion of the NPBS 120, to rotate a plane of polarization of the quantum encoded photon 310, and to direct the quantum encoded photon 310 to exit from an output portion (e.g., a right output portion) of the fixed polarization rotator component 125; and the PBS 130 is positioned and configured to receive the quantum encoded photon 310 when the quantum encoded photon 310 exits from the second output portion of the NPBS 120 and to direct the quantum encoded photon 310 to exit from a particular output portion of the NPBS 120, such as a first output portion (e.g., a top output portion) or a second output portion (e.g., a left output portion) of the PBS 130.

As shown in Figs. 3A-3C, the first other PBS 305-1 is positioned (e.g., within the QPV prover device 105) to receive the quantum encoded photon 310 when the quantum encoded photon 310 exits from the output portion of the fixed polarization rotator component 125. For example, as shown in Figs. 3A-3C, the first other PBS 305-1 is positioned to receive the quantum encoded photon 310 (e.g., at a left input portion of the first other PBS 305-1) when the quantum encoded photon 310 exits from the right output portion of the fixed polarization rotator component 125.

The first other PBS 305-1 is configured to direct (e.g., transmit or reflect, along with other examples) light (e.g., comprising one or more photons) based on a polarization of the light, such as in a similar manner as that described herein in relation to other PBSs described herein. The first other PBS 305-1 may be configured to direct the quantum encoded photon 310 to exit from a particular output portion of the first other PBS 305-1. For example, as shown in Figs. 3A-3C, the first other PBS 305-1 may direct the quantum encoded photon 310 to exit from one of a first output portion (e.g., a right output portion) of the first other PBS 305-1 or a second output portion (e.g., a top output portion) of the first other PBS 305-1, such as based on whether the quantum encoded photon 310 (e.g., as rotated by the fixed polarization rotator component 125) has an H-polarization or a V-polarization.

As shown in Figs. 3A-3B, the set of reflectors 205 may be positioned (e.g., within the QPV prover device 105) to receive the quantum encoded photon 310 when the quantum encoded photon 310 exits from the first output portion of the first other PBS 305-1 and to direct the quantum encoded photon 310 to the second other PBS 305-2. For example, as shown in Figs. 3A-3B, the set of reflectors 205 may include a first reflector 205-1 and a second reflector 205-2. The first reflector 205-1 is positioned to receive the quantum encoded photon 310 at an input portion of first reflector 205-1 when the quantum encoded photon 310 exits from first output portion of the first other PBS 305-1 and to direct (e.g., via reflection) the quantum encoded photon 310 to exit from an output portion of the first reflector 205-1, such as to the second reflector 205-2. The second reflector 205-2 is positioned to receive the quantum encoded photon 310 at an input portion of the second reflector 205-2 when the quantum encoded photon 310 exits from output portion of the first reflector 205-1 and to direct (e.g., via reflection) the quantum encoded photon 310 to exit from an output portion of the second reflector 205-2, such as to the second other PBS 305-2.

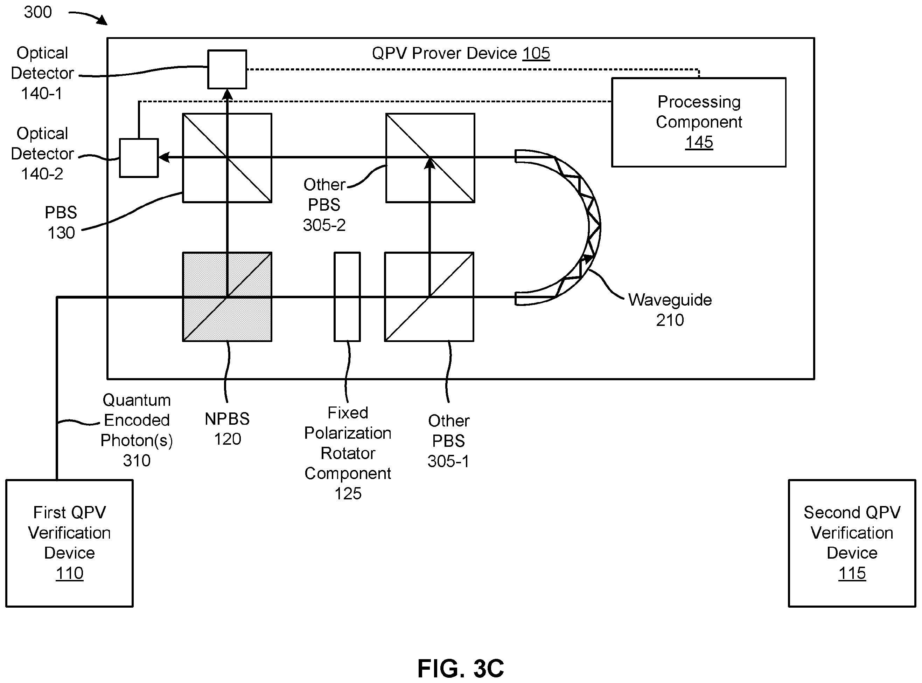

Alternatively, as shown in Fig. 3C, the waveguide 210 may be positioned (e.g., within the QPV prover device 105) to receive the quantum encoded photon 310 when the quantum encoded photon 310 exits from the first output portion of the first other PBS 305-1 and to direct the quantum encoded photon 310 to the second other PBS 305-2. For example, as shown in Figs. 3C, the waveguide 210 is positioned to receive the quantum encoded photon 310 at an input portion of the waveguide 210 when the quantum encoded photon 310 exits from the first other PBS 305-1 and to propagate and direct (e.g., via reflection within the waveguide) the quantum encoded photon 310 to exit from an output portion of the waveguide 210, such as to the second other PBS 305-2.

As shown in Figs. 3A-3C, the second other PBS 305-2 is positioned (e.g., within the QPV prover device 105) to receive the quantum encoded photon 310 when the quantum encoded photon 310 exits from the first other PBS 305-1, or from one of the set of reflectors 205 or the waveguide 210. For example, as shown in Figs. 3A-3C, the second other PBS 305-2 is positioned to receive the quantum encoded photon 310 at a first input portion (e.g., a bottom input portion) of the second other PBS 305-2 when the quantum encoded photon 310 exits from the second output portion (e.g., the top output portion) of the first other PBS 305-1, or at a second input portion (e.g., a right input portion) of the second other PBS 305-2 when the quantum encoded photon 310 exits from one of the output portion of the second reflector 205-2 or the output portion of the waveguide 210.

The second other PBS 305-2 is configured to direct (e.g., transmit or reflect, along with other examples) light (e.g., comprising one or more photons) based on a polarization of the light, such as in a similar manner as that described herein in relation to other PBSs described herein. The second other PBS 305-2 may be configured to direct the quantum encoded photon 310 to exit from an output portion (e.g., a left output portion) of the second other PBS 305-2. For example, as shown in Figs. 3A-3C, the second other PBS 305-2 may reflect the quantum encoded photon 310 to exit from the output portion of the second other PBS 305-2 when the when the quantum encoded photon 310 exits from the second output portion (e.g., the top output portion) of the first other PBS 305-1 (e.g., when the quantum encoded photon 310 has a first polarization of an H-polarization or a V-polarization), and may transmit the quantum encoded photon 310 to exit from the output portion of the second other PBS 305-2 when the when the quantum encoded photon 310 exits from one of the output portion of the second reflector 205-2 or the output portion of the waveguide 210 (e.g., when the quantum encoded photon 310 has a second polarization of the H-polarization or the V-polarization). In this way, the second other PBS 305-2 may direct the quantum encoded photon 310 to the PBS 130. Accordingly, the PBS 130 may be further positioned (e.g., within the QPV prover device 105) to receive the quantum encoded photon 310 when the quantum encoded photon 310 exits from the second other PBS 305-2. For example, as shown in Figs. 3A-3C, the PBS 130 may be further positioned to receive the quantum encoded photon 310 at a right input portion of the PBS 130 when the quantum encoded photon 310 exits from the left output portion of the second other PBS 305-2. As described elsewhere herein, the PBS 130 is configured to direct (e.g., transmit or reflect, along with other examples) light (e.g., comprising one or more photons) based on a polarization of the light. Accordingly, the PBS 130, regardless of whether the PBS received the quantum encoded photon 310 via the bottom input portion of the PBS 130 or the right input portion of the PBS 130, is configured to direct the quantum encoded photon 310 to exit from a particular output portion of the PBS 130. For example, as shown in Figs. 3A-3C, the PBS 130 may direct the quantum encoded photon 310 to exit from one of the first output portion (e.g., the top output portion) of the PBS 130 or the second output portion (e.g., the left output portion) of the PBS 130, such as based on whether the quantum encoded photon 310 has an H-polarization or a V-polarization.

As described elsewhere herein, the set of optical detectors 140 are positioned to detect the quantum encoded photon 310 (e.g., after propagation of the quantum encoded photon 310 via the fixed polarization rotator component 125 or the PBS 130). For example, the set of optical detectors 140 may include a first optical detector 140-1 and a second optical detector 140-2, where the first optical detector 140-1 is positioned to receive the quantum encoded photon 310 when the quantum encoded photon 310 exits from the first output portion (e.g., the top output portion) of the PBS 130, the second optical detector 140-2 is positioned to receive the quantum encoded photon 310 when the quantum encoded photon 310 exits from the second output portion (e.g., a left output portion) of the PBS 130.

As described elsewhere herein, each optical detector 140 is configured to detect light (e.g., comprising one or more photons), and, in some implementations, is configured to detect single photons. For example, each optical detector 140 may be configured to detect the quantum encoded photon 310 when the quantum encoded photon 310 impinges on the optical detector 140.

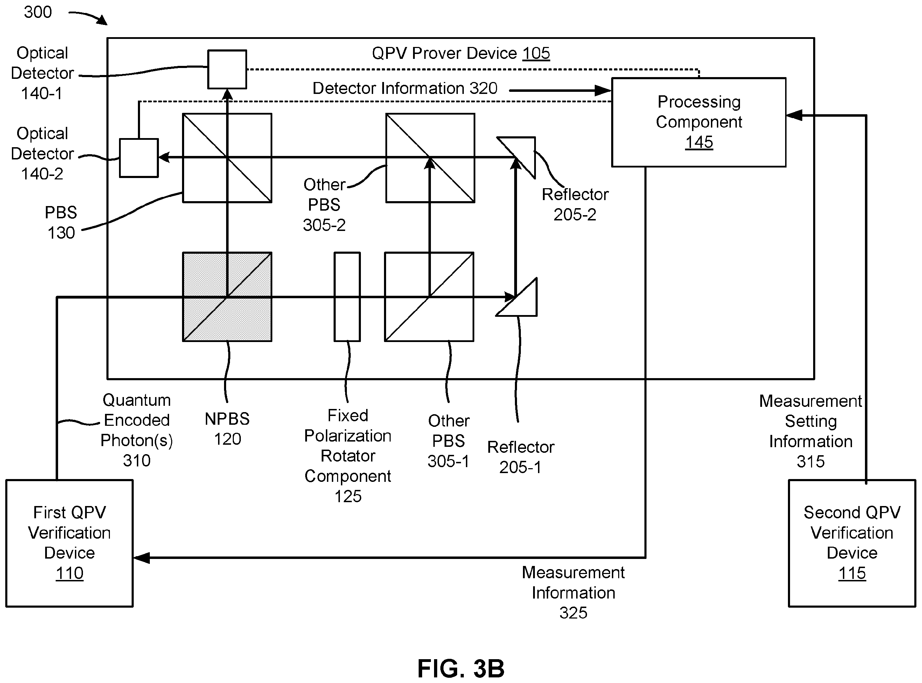

As shown in Fig 3B, and by reference number 315, the QPV prover device 105 (e.g., using the processing component 145) obtains measurement setting information, such as from the second QPV verification device 115 (e.g., in a similar manner as that described herein in relation to Fig. 1B and reference number 155).

The measurement setting information 315 may identify whether the set of optical detectors 140 is expected to receive the quantum encoded photon 310 within a first time window or either one of a second time window that follows the first time window or a third time window that follows the second time window. The first time window may be associated with propagation of the quantum encoded photon 310 via the NPBS 120 and the PBS 130 (e.g., without propagation via the fixed polarization rotator component 125). The second time window may be associated with propagation of the quantum encoded photon 310 via the NPBS 120, the fixed polarization rotator component 125, the first other PBS 305-1, the second other PBS 305-2, and the PBS 130. The third time window may be associated with propagation of the quantum encoded photon 310 via the NPBS 120, the fixed polarization rotator component 125, the first other PBS 305-1, one of the set of reflectors 205 or the waveguide 210, the second other PBS 305-2, and the PBS 130. Put differently, the measurement setting information 315 may identify whether the set of optical detectors 140 is expected to receive the quantum encoded photon 310 within a first time window associated with a non-time-delayed path within the QPV prover device 105 or either one of a second time window associated with a first time-delayed path within the QPV prover device 105 or a third time window associated with a second time-delayed path within the QPV prover device 105. Additionally, or alternatively, the measurement setting information 315 may identify whether one optical detector 140 (e.g., one particular optical detector 140), of the set of optical detectors 140, is expected to receive the quantum encoded photon 310. For example, the measurement setting information 315 may identify whether the first optical detector 140-1 or the second optical detector 140-2 is expected to receive the quantum encoded photon 310 (e.g., within the first time window or either of the second time window or the third time window).

As shown by reference number 320, the QPV prover device 105 (e.g., using the processing component 145) may obtain detector information (e.g., in a similar manner as that described herein in relation to Fig. 1B and reference number 160). The detector information 320 indicates which optical detector 140, of the set of optical detectors 140, received (e.g., detected) the quantum encoded photon 310 and a time of reception. For example, with respect to what is shown in Fig. 3B, the detector information 320 may indicate that the first optical detector 140-1 or the second optical detector 140-2 received the quantum encoded photon 310 and a time of reception.

As shown by reference number 325, the QPV prover device 105 (e.g., using the processing component 145) may determine measurement information (e.g., in a similar manner as that described herein in relation to Fig. 1B and reference number 165). The QPV prover device 105 may determine the measurement information 325 based on the measurement setting information 315 and the detector information 320. In some implementations, the QPV prover device 105 may determine, and therefore may cause the measurement information 325 to indicate, whether the set of optical detectors 140 received the quantum encoded photon 215 (e.g., as indicated by the detector information 320) within a time window (e.g., that is indicated by the measurement setting information 315). For example, the QPV prover device 105 may determine, and therefore may cause the measurement information325 to indicate, whether the first optical detector 140-1 and the second optical detector 140-2 received the quantum encoded photon 310 within a time window (e.g., the first time window or either the second time window or the third time window) indicated by the measurement setting information 315.

Additionally, or alternatively, the QPV prover device 105 may determine, and therefore may cause the measurement information 325 to indicate, whether one optical detector 140 (e.g., one particular optical detector 140), of the set of optical detectors 140, that is expected to receive the quantum encoded photon 310 (e.g., as indicated by the measurement setting information 315) successfully received the quantum encoded photon 310 (e.g., within a time window indicated by the measurement setting information 315). For example, the QPV prover device 105 may determine, and therefore may cause the measurement information 325 to indicate, whether the first optical detector 140-1 or the second optical detector 140-2 successfully received the quantum encoded photon 310 (e.g., as expected) within an expected time window.

As further shown by reference number 325, the QPV prover device 105 (e.g., using the processing component 145) transmits the measurement information, such as to the first QPV verification device 110 (e.g., in a similar manner as that described herein in relation to Fig. 1B and reference number 165).

While description related to Figs. 3A-3C is directed to propagation of a single quantum encoded photon 310 from the first QPV verification device 110 to the set of optical detectors 140 of the QPV prover device 105, the description is applicable to propagation of multiple quantum encoded photons 310 from the first QPV verification device 110 to the set of optical detectors 140 of the QPV prover device 105. Accordingly, in a similar manner as that described herein in relation to Figs 3A-3C, the QPV prover device 105 may obtain measurement setting information 315 and detector information 320 that corresponds to each quantum encoded photon 310 and may determine and transmit measurement information 325 that corresponds to each quantum encoded photon 310. Accordingly, the first QPV verification device 110 may obtain a sufficient amount of information (e.g., a sufficient amount of measurement information 325) to determine (e.g., accurately determine) a physical location of the QPV prover device 105.

As indicated above, Figs. 3A-3C are provided as an example. Other examples may differ from what is described with regard to Figs. 3A-3C.

Fig. 4 is a diagram of example components of a device 400 associated with a QPV prover device with an NPBS. The device 400 corresponds to one or more of the QPV prover device 105, the first QPV verification device 110, the second QPV verification device 115, and/or the processing component 145. In some implementations, the QPV prover device 105, the first QPV verification device 110, the second QPV verification device 115, and/or the processing component 145 include one or more devices 400 and/or one or more components of the device 400. In the example shown in Fig. 4, the device 400 includes a bus 410, a processor 420, a memory 430, an input component 440, an output component 450, and/or a communication component 460.

The bus 410 includes one or more components that enable wired and/or wireless communication among the components of the device 400. The bus 410 couples together two or more components of Fig. 4, such as via operative coupling, communicative coupling, electronic coupling, and/or electric coupling. For example, the bus 410 may include an electrical connection (e.g., a wire, a trace, and/or a lead) and/or a wireless bus. The processor 420 includes a central processing unit, a graphics processing unit, a microprocessor, a controller, a microcontroller, a digital signal processor, a field-programmable gate array, an application-specific integrated circuit, and/or another type of processing component. The processor 420 may be implemented in hardware, firmware, or a combination of hardware and software. In some implementations, the processor 420 includes one or more processors capable of being programmed to perform one or more operations or processes described elsewhere herein.

The memory 430 includes volatile and/or nonvolatile memory, such as random access memory (RAM), read only memory (ROM), a hard disk drive, and/or another type of memory (e.g., a flash memory, a magnetic memory, and/or an optical memory). The memory 430 may include internal memory (e.g., RAM, ROM, or a hard disk drive) and/or removable memory (e.g., removable via a universal serial bus connection). In some implementations, the memory 430 is a non-transitory computer-readable medium. The memory 430 stores information, one or more instructions, and/or software (e.g., one or more software applications) related to the operation of the device 400. In some implementations, the memory 430 includes one or more memories that are coupled (e.g., communicatively coupled) to one or more processors (e.g., processor 420), such as via the bus 410. Communicative coupling between a processor 420 and a memory 430 enables the processor 420 to read and/or process information stored in the memory 430 and/or to store information in the memory 430.

The input component 440 enables the device 400 to receive input, such as user input and/or sensed input. For example, the input component 440 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 450 enables the device 400 to provide output, such as via a display, a speaker, and/or a light-emitting diode. The communication component 460 enables the device 400 to communicate with other devices via a wired connection and/or a wireless connection. For example, the communication component 460 may include a receiver, a transmitter, a transceiver, a modem, a network interface card, and/or an antenna.

In some implementations, the device 400 performs one or more operations or processes described herein. For example, a non-transitory computer-readable medium (e.g., memory 430) may store a set of instructions (e.g., one or more instructions or code) for execution by the processor 420. The processor 420 may execute the set of instructions to perform one or more operations or processes described herein. In some implementations, execution of the set of instructions, by one or more processors 420, causes the one or more processors 420 and/or the device 400 to perform one or more operations or processes described herein. In some implementations, hardwired circuitry is used instead of or in combination with the instructions to perform one or more operations or processes described herein. Additionally, or alternatively, the processor 420 may be configured to perform one or more operations or processes described herein. Thus, implementations described herein are not limited to any specific combination of hardware circuitry and software.

The number and arrangement of components shown in Fig. 4 are provided as an example. The device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

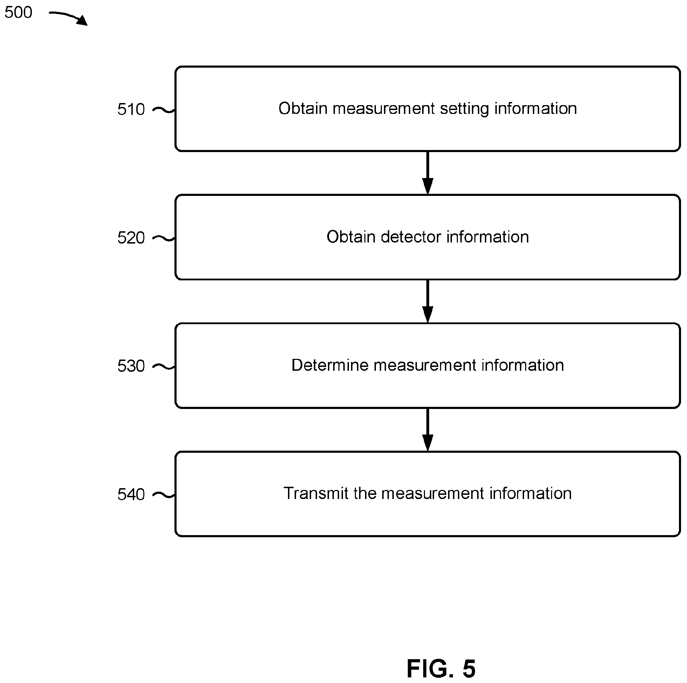

Fig. 5 is a flowchart of an example process 500 associated with a QPV prover device with an NPBS. One or more process blocks of Fig. 5 are performed by a processing component (e.g., the processing component 145) of a QPV device (e.g., QPV prover device 105) and/or by another device or a group of devices separate from or including the processing component, such as another component of the QPV prover device. Additionally, or alternatively, one or more process blocks of Fig. 5 may be performed by one or more components of device 400, such as processor 420, memory 430, input component 440, output component 450, and/or communication component 460.

As shown in Fig. 5, process 500 includes obtaining measurement setting information (block 510). For example, the processing component may obtain measurement setting information, as described above.

As further shown in Fig. 5, process 500 includes obtaining detector information (block 520). For example, the processing component obtain detector information, as described above. For example, the processing component may obtain, after obtaining the measurement setting information, detector information from a set of optical detectors of the QPV device and based on the set of optical detectors detecting a quantum encoded photon that is received by an NPBS of the QPV device and propagated to the set of optical detectors via at least one of a fixed polarization rotator component or a PBS of the QPV device, as described above.

As further shown in Fig. 5, process 500 includes determining measurement information (block 530). For example, the processing component may determine measurement information, as described above. The processing component may determine the measurement information based on the measurement setting information and the detector information. As further shown in Fig. 5, process 500 includes transmitting the measurement information (block 540). For example, the processing component may transmit the measurement information, as described above.

Process 500 may include additional aspects, such as any single aspect or any combination of aspects described below and/or in connection with one or more other processes described elsewhere herein. In a first aspect, the measurement setting information identifies whether a pair of optical detectors, of multiple pairs of optical detectors of the set of optical detectors, is expected to receive the quantum encoded photon.

In a second aspect, alone or in combination with the first aspect, the measurement setting information identifies whether the set of optical detectors is expected to receive the quantum encoded photon within a first time window or a second time window that follows the first time window.

In a third aspect, alone or in combination with one or more of the first and second aspects, the measurement information indicates whether a pair of optical detectors of multiple pairs of optical detectors of the set of optical detectors, that is expected to receive the quantum encoded photon, as indicated by the measurement setting information, successfully received the quantum encoded photon.

In a fourth aspect, alone or in combination with one or more of the first through third aspects, the measurement information indicates whether the set of optical detectors received the quantum encoded photon within a time window indicated by the measurement setting information.

Although Fig. 5 shows example blocks of process 500, in some implementations, process 500 includes additional blocks, fewer blocks, different blocks, or differently arranged blocks than those depicted in Fig. 5. Additionally, or alternatively, two or more of the blocks of process 500 may be performed in parallel.

The foregoing disclosure provides illustration and description, but is not intended to be exhaustive or to limit the implementations described herein to the precise forms that are described. Modifications and variations can be made in light of the above description or may be acquired from practice of the implementations described herein.

Even though particular combinations of features are recited in the claims and/or described in the specification, these combinations are not intended to limit the implementations described herein. In fact, many of these features can be combined in ways not specifically recited in the claims and/or described in the specification. For example, the description includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item. When "a component" or "one or more components" (or another element, such as "a processor" or "one or more processors") is described or claimed (within a single claim or across multiple claims) as performing multiple operations or being configured to perform multiple operations, this language is intended to broadly cover a variety of architectures and environments. For example, unless explicitly claimed otherwise (e.g., via the use of "first component" and "second component" or other language that differentiates components in the claims), this language is intended to cover a single component performing or being configured to perform all of the operations, a group of components collectively performing or being configured to perform all of the operations, a first component performing or being configured to perform a first operation and a second component performing or being configured to perform a second operation, or any combination of components performing or being configured to perform the operations. For example, when a claim has the form "one or more components configured to: perform X; perform Y; and perform Z," that claim should be interpreted to mean "one or more components configured to perform X; one or more (possibly different) components configured to perform Y; and one or more (also possibly different) components configured to perform Z."

No element, act, or instruction used herein should be construed as critical or essential unless explicitly described as such. Also, as used herein, the articles "a" and "an" are intended to include one or more items, and can be used interchangeably with "one or more." Further, as used herein, the article "the" is intended to include one or more items referenced in connection with the article "the" and can be used interchangeably with "the one or more." Furthermore, as used herein, the term "set" is intended to include one or more items (e.g., related items, unrelated items, or a combination of related and unrelated items,), and can be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and can be used interchangeably with "and/or," unless explicitly stated otherwise (e.g., if used in combination with "either" or "only one of").

Further examples and combinations thereof include the followings.

Clause 1. A quantum position verification, QPV, prover device (105), comprising:
a non-polarizing beam splitter, NPBS, (120) positioned to receive a quantum encoded photon (150; 215; 310) from a first QPV verification device (110);
a fixed rotator component (125) positioned to receive the quantum encoded photon (150; 215; 310) when the quantum encoded photon (150; 215; 310) exits from a first output portion of the NPBS (120);
a polarizing beam splitter, PBS, (130) positioned to receive the quantum encoded photon (150; 215; 310) when the quantum encoded photon (150; 215; 310) exits from a second output portion of the NPBS (120); and
a set of optical detectors (140-1, 140-2, 140-3, 140-4) positioned to detect the quantum encoded photon (150; 215; 310) after propagation of the quantum encoded photon (150; 215; 310) via at least one of the fixed rotator component (125) or the PBS (130).

Clause 2. The QPV prover device (105) of Clause 1, further comprising another PBS (135) positioned to receive the quantum encoded photon (150; 215; 310) when the quantum encoded photon (150; 215; 310) exits from the fixed rotator component (125), wherein:
the set of optical detectors (140-1, 140-2, 140-3, 140-4) includes a first optical detector (140-1), a second optical detector (140-2), a third optical detector (140-3), and a fourth optical detector (140-4);
the first optical detector (140-1) is positioned to receive the quantum encoded photon (150; 215; 310) when the quantum encoded photon (150; 215; 310) exits from a first output portion of the PBS (130);
the second optical detector (140-2) is positioned to receive the quantum encoded photon (150; 215; 310) when the quantum encoded photon (150; 215; 310) exits from a second output portion of the PBS (130);
the third optical detector (140-3) is positioned to receive the quantum encoded photon (150; 215; 310) when the quantum encoded photon (150; 215; 310) exits from a first output portion of the other PBS (135); and
the fourth optical detector (140-4) is positioned to receive the quantum encoded photon (150; 215; 310) when the quantum encoded photon (150; 215; 310) exits from a second output portion of the other PBS (135).

Clause 3. The QPV prover device (105) of Clause 1, further comprising a first reflector (205-1) and a second reflector (205-2), and wherein:
the first reflector (205-1) is positioned to receive the quantum encoded photon (150; 215; 310) when the quantum encoded photon (150; 215; 310) exits from the fixed rotator component (125);
the second reflector (205-2) is positioned to receive the quantum encoded photon (150; 215; 310) when the quantum encoded photon (150; 215; 310) exits from the first reflector (205-1);
the PBS (130) is further positioned to receive the quantum encoded photon (150; 215; 310) when the quantum encoded photon (150; 215; 310) exits from the second reflector (205-2);
the set of optical detectors (140-1, 140-2, 140-3, 140-4) includes a first optical detector (140-1) and a second optical detector (140-2);
the first optical detector (140-1) is positioned to receive the quantum encoded photon (150; 215; 310) when the quantum encoded photon (150; 215; 310) exits from a first output portion of the PBS (130); and
the second optical detector (140-2) is positioned to receive the quantum encoded photon (150; 215; 310) when the quantum encoded photon (150; 215; 310) exits from a second output portion of the PBS (130).

Clause 4. The QPV prover device (105) of Clause 1, further comprising a first other PBS (305-1), a second other PBS (305-2), a first reflector (205-1), and a second reflector (205-2), and wherein:
the first other PBS (305-1) is positioned to receive the quantum encoded photon (150; 215; 310) when the quantum encoded photon (150; 215; 310) exits from the fixed rotator component (125);
the first reflector (205-1) is positioned to receive the quantum encoded photon (150; 215; 310) when the quantum encoded photon (150; 215; 310) exits from a first output portion of the first other PBS (305-1);
the second reflector (205-2) is positioned to receive the quantum encoded photon (150; 215; 310) when the quantum encoded photon (150; 215; 310) exits from the first reflector (205-1);
the second other PBS (305-2) is positioned to receive the quantum encoded photon (150; 215; 310) when the quantum encoded photon (150; 215; 310) exits from the first other PBS (305-1) or from the second reflector (205-2);
the PBS (130) is further positioned to receive the quantum encoded photon (150; 215; 310) when the quantum encoded photon (150; 215; 310) exits from the second other PBS (305-2);
the set of optical detectors (140-1, 140-2, 140-3, 140-4) includes a first optical detector (140-1) and a second optical detector (140-2);
the first optical detector (140-1) is positioned to receive the quantum encoded photon (150; 215; 310) when the quantum encoded photon (150; 215; 310) exits from a first output portion of the PBS (130); and
the second optical detector (140-2) is positioned to receive the quantum encoded photon (150; 215; 310) when the quantum encoded photon (150; 215; 310) exits from a second output portion of the PBS (130).

Clause 5. The QPV prover device (105) of Clause 1, further comprising a processing component (145) configured to:
obtain measurement setting information (155; 220; 315) from a second QPV verification device (115);
obtain, after obtaining the measurement setting information (155; 220; 315), detector information (160; 225; 320) from the set of optical detectors (140-1, 140-2, 140-3, 140-4) based on a particular optical detector, of the set of optical detectors (140-1, 140-2, 140-3, 140-4), receiving the quantum encoded photon (150; 215; 310);
determine, based on the measurement setting information (155; 220; 315) and the detector information (160; 225; 320), measurement information (165; 230; 325); and transmit the measurement information (165; 230; 325) to the first QPV verification device (110).

Clause 6. The QPV prover device (105) of Clause 5, wherein:
the measurement setting information (155; 220; 315) identifies whether one of a pair of optical detectors (140-1, 140-2, 140-3, 140-4), of the set of optical detectors (140-1, 140-2, 140-3, 140-4), is expected to receive the quantum encoded photon (150; 215; 310), wherein the pair of optical detectors (140-1, 140-2, 140-3, 140-4) are positioned to receive the quantum encoded photon (150; 215; 310) when the quantum encoded photon (150; 215; 310) exits from respective output portions of the PBS (130) or from respective output portions of the other PBS (135).

Clause 7. The QPV prover device (105) of Clause 5, wherein:
the measurement setting information (155; 220; 315) identifies whether the set of optical detectors (140-1, 140-2, 140-3, 140-4) is expected to receive the quantum encoded photon (150; 215; 310) within a first time window or a second time window that follows the first time window.

Clause 8. The QPV prover device (105) of Clause 5, wherein:
the measurement setting information (155; 220; 315) identifies whether the set of optical detectors (140-1, 140-2, 140-3, 140-4) are expected to receive the quantum encoded photon (150; 215; 310) within a first time window or either one of a second time window that follows the first time window or a third time window that follows the second time window. Clause 9. The QPV prover device (105) of Clause 5, wherein:
the measurement information (165; 230; 325) indicates whether one of a pair of optical detectors (140-1, 140-2, 140-3, 140-4), of the set of optical detectors (140-1, 140-2, 140-3, 140-4), that is expected to receive the quantum encoded photon (150; 215; 310), as indicated by the measurement setting information (155; 220; 315), successfully received the quantum encoded photon (150; 215; 310).

Clause 10. The QPV prover device (105) of Clause 5, wherein:
the measurement information (165; 230; 325) indicates whether the set of optical detectors (140-1, 140-2, 140-3, 140-4) received the quantum encoded photon (150; 215; 310) within a time window indicated by the measurement setting information (155; 220; 315).

Clause 11. A device (105) comprising:
a non-polarizing beam splitter, NPBS, (120) positioned to receive a quantum encoded photon (150; 215; 310);
a fixed rotator component (125) positioned to receive the quantum encoded photon (150; 215; 310) from a first output portion of the NPBS (120);
a polarizing beam splitter, PBS, (130) positioned to receive the quantum encoded photon (150; 215; 310) from a second output portion of the NPBS (120); and
a set of optical detectors (140-1, 140-2, 140-3, 140-4) positioned to detect the quantum encoded photon (150; 215; 310) after propagation of the quantum encoded photon (150; 215; 310) via at least one of the fixed rotator component (125) or the PBS (130).

Clause 12. The device (105) of Clause 11, further comprising another PBS (135) positioned to receive the quantum encoded photon (150; 215; 310) from the fixed rotator component (125), wherein:
the set of optical detectors (140-1, 140-2, 140-3, 140-4) includes a first pair of optical detectors (140-1, 140-2, 140-3, 140-4) and a second pair of optical detectors (140-1, 140-2, 140-3, 140-4);
the first pair of optical detectors (140-1, 140-2, 140-3, 140-4) are each positioned to receive the quantum encoded photon (150; 215; 310) from a respective output portion of the PBS (130); and
the second pair of optical detectors (140-1, 140-2, 140-3, 140-4) are each positioned to receive the quantum encoded photon (150; 215; 310) from a respective output portion of the other PBS (135).

Clause 13. The device (105) of Clause 11, further comprising a set of reflectors (205-1, 205-2) or a waveguide (210), wherein:
the set of reflectors (205-1, 205-2) or the waveguide (210) are positioned to receive the quantum encoded photon (150; 215; 310) from the fixed rotator component (125);
the PBS (130) is further positioned to receive the quantum encoded photon (150; 215; 310) from the set of reflectors (205-1, 205-2) or the waveguide (210); and
a pair of optical detectors (140-1, 140-2, 140-3, 140-4), of the set optical detectors (140-1, 140-2, 140-3, 140-4), are each positioned to receive the quantum encoded photon (150; 215; 310) from a respective output portion of the PBS (130).

Clause 14. The device (105) of Clause 11, further comprising a first other PBS (305-1) , a second other PBS (305-2), and a set of reflectors (205-1, 205-2) or a waveguide (210), wherein:
the first other PBS (305-1) is positioned to receive the quantum encoded photon (150; 215; 310) from the fixed rotator component (125);
the set of reflectors (205-1, 205-2) or the waveguide (210) are positioned to receive the quantum encoded photon (150; 215; 310) from a first output portion of the first other PBS (305-1);
the second other PBS (305-2) is positioned to receive the quantum encoded photon (150; 215; 310) from the set of reflectors (205-1, 205-2) or the waveguide (210);
the PBS (130) is further positioned to receive the quantum encoded photon (150; 215; 310) from the second other PBS (305-2); and
a pair of optical detectors (140-1, 140-2, 140-3, 140-4), of the set of optical detectors (140-1, 140-2, 140-3, 140-4), are each positioned to receive the quantum encoded photon (150; 215; 310) from a respective output portion of the PBS (130).

Clause 15. The device (105) of Clause 11, further comprising a processing component (145) configured to:
obtain measurement setting information (155; 220; 315);
obtain, after obtaining the measurement setting information (155; 220; 315), detector information (160; 225; 320) from the set of optical detectors (1401, 140-2, 140-3, 140-4) based on the set of optical detectors (1401, 140-2, 140-3, 140-4) detecting the quantum encoded photon (150; 215; 310);
determine, based on the measurement setting information (155; 220; 315) and the detector information (160; 225; 320), measurement information (165; 230; 325); and
transmit the measurement information (165; 230; 325).

Clause 16. A method (500), comprising:
obtaining (510), by a processing component (145) of a quantum position verification, QPV device (105), measurement setting information (155; 220; 315);
obtaining (520), after obtaining the measurement setting information (155; 220; 315), detector information (160; 225; 320) from a set of optical detectors (140-1, 140-2, 140-3, 140-4) of the QPV device (105) and based on the set of optical detectors (140-1, 140-2, 140-3, 140-4) detecting a quantum encoded photon (150; 215; 310) that is received by a non-polarizing beam splitter, NPBS, (120) of the QPV device (105) and propagated to the set of optical detectors (140-1, 140-2, 140-3, 140-4) via at least one of a fixed rotator component (125) or a polarizing beam splitter, PBS, (130) of the QPV device (105);
determining (530), based on the measurement setting information (155; 220; 315) and the detector information (160; 225; 320), measurement information (165; 230; 325); and transmitting (540) the measurement information (165; 230; 325).

Clause 17. The method (500) of Clause 16, wherein:
the measurement setting information (155; 220; 315) identifies whether a pair of optical detectors (140-1, 140-2, 140-3, 140-4), of multiple pairs of optical detectors of the set of optical detectors (140-1, 140-2, 140-3, 140-4), is expected to receive the quantum encoded photon (150; 215; 310).

Clause 18. The method (500) of Clause 16, wherein:
the measurement setting information (155; 220; 315) identifies whether the set of optical detectors (140-1, 140-2, 140-3, 140-4) is expected to receive the quantum encoded photon (150; 215; 310) within a first time window or a second time window that follows the first time window.

Clause 19. The method (500) of Clause 16, wherein:
the measurement information (165; 230; 325) indicates whether a pair of optical detectors (140-1, 140-2, 140-3, 140-4) of multiple pairs of optical detectors of the set of optical detectors (140-1, 140-2, 140-3, 140-4), that is expected to receive the quantum encoded photon (150; 215; 310), as indicated by the measurement setting information (155; 220; 315), successfully received the quantum encoded photon (150; 215; 310).

Clause 20. The method (500) of Clause 16, wherein:
the measurement information (165; 230; 325) indicates whether the set of optical detectors (140-1, 140-2, 140-3, 140-4) received the quantum encoded photon (150; 215; 310) within a time window indicated by the measurement setting information (155; 220; 315).

## Claims

1. A quantum position verification, QPV, prover device (105), comprising:
a non-polarizing beam splitter, NPBS, (120) positioned to receive a quantum encoded photon (150; 215; 310) from a first QPV verification device (110);
a fixed rotator component (125) positioned to receive the quantum encoded photon (150; 215; 310) when the quantum encoded photon (150; 215; 310) exits from a first output portion of the NPBS (120);
a polarizing beam splitter, PBS, (130) positioned to receive the quantum encoded photon (150; 215; 310) when the quantum encoded photon (150; 215; 310) exits from a second output portion of the NPBS (120); and
a set of optical detectors (140-1, 140-2, 140-3, 140-4) positioned to detect the quantum encoded photon (150; 215; 310) after propagation of the quantum encoded photon (150; 215; 310) via at least one of the fixed rotator component (125) or the PBS (130).

2. The QPV prover device (105) of claim 1, further comprising another PBS (135) positioned to receive the quantum encoded photon (150; 215; 310) when the quantum encoded photon (150; 215; 310) exits from the fixed rotator component (125), wherein:
the set of optical detectors (140-1, 140-2, 140-3, 140-4) includes a first optical detector (140-1), a second optical detector (140-2), a third optical detector (140-3), and a fourth optical detector (140-4);
the first optical detector (140-1) is positioned to receive the quantum encoded photon (150; 215; 310) when the quantum encoded photon (150; 215; 310) exits from a first output portion of the PBS (130);
the second optical detector (140-2) is positioned to receive the quantum encoded photon (150; 215; 310) when the quantum encoded photon (150; 215; 310) exits from a second output portion of the PBS (130);
the third optical detector (140-3) is positioned to receive the quantum encoded photon (150; 215; 310) when the quantum encoded photon (150; 215; 310) exits from a first output portion of the other PBS (135); and
the fourth optical detector (140-4) is positioned to receive the quantum encoded photon (150; 215; 310) when the quantum encoded photon (150; 215; 310) exits from a second output portion of the other PBS (135).

3. The QPV prover device (105) of claim 1, further comprising a first reflector (205-1) and a second reflector (205-2), and wherein:
the first reflector (205-1) is positioned to receive the quantum encoded photon (150; 215; 310) when the quantum encoded photon (150; 215; 310) exits from the fixed rotator component (125);
the second reflector (205-2) is positioned to receive the quantum encoded photon (150; 215; 310) when the quantum encoded photon (150; 215; 310) exits from the first reflector (205-1);
the PBS (130) is further positioned to receive the quantum encoded photon (150; 215; 310) when the quantum encoded photon (150; 215; 310) exits from the second reflector (205-2);
the set of optical detectors (140-1, 140-2, 140-3, 140-4) includes a first optical detector (140-1) and a second optical detector (140-2);
the first optical detector (140-1) is positioned to receive the quantum encoded photon (150; 215; 310) when the quantum encoded photon (150; 215; 310) exits from a first output portion of the PBS (130); and
the second optical detector (140-2) is positioned to receive the quantum encoded photon (150; 215; 310) when the quantum encoded photon (150; 215; 310) exits from a second output portion of the PBS (130).

4. The QPV prover device (105) of claim 1, further comprising a first other PBS (305-1), a second other PBS (305-2), a first reflector (205-1), and a second reflector (205-2), and wherein:
the first other PBS (305-1) is positioned to receive the quantum encoded photon (150; 215; 310) when the quantum encoded photon (150; 215; 310) exits from the fixed rotator component (125);
the first reflector (205-1) is positioned to receive the quantum encoded photon (150; 215; 310) when the quantum encoded photon (150; 215; 310) exits from a first output portion of the first other PBS (305-1);
the second reflector (205-2) is positioned to receive the quantum encoded photon (150; 215; 310) when the quantum encoded photon (150; 215; 310) exits from the first reflector (205-1);
the second other PBS (305-2) is positioned to receive the quantum encoded photon (150; 215; 310) when the quantum encoded photon (150; 215; 310) exits from the first other PBS (305-1) or from the second reflector (205-2);
the PBS (130) is further positioned to receive the quantum encoded photon (150; 215; 310) when the quantum encoded photon (150; 215; 310) exits from the second other PBS (305-2);
the set of optical detectors (140-1, 140-2, 140-3, 140-4) includes a first optical detector (140-1) and a second optical detector (140-2);
the first optical detector (140-1) is positioned to receive the quantum encoded photon (150; 215; 310) when the quantum encoded photon (150; 215; 310) exits from a first output portion of the PBS (130); and
the second optical detector (140-2) is positioned to receive the quantum encoded photon (150; 215; 310) when the quantum encoded photon (150; 215; 310) exits from a second output portion of the PBS (130).

5. The QPV prover device (105) of claim 1, further comprising a processing component (145) configured to:
obtain measurement setting information (155; 220; 315) from a second QPV verification device (115);
obtain, after obtaining the measurement setting information (155; 220; 315), detector information (160; 225; 320) from the set of optical detectors (140-1, 140-2, 140-3, 140-4) based on a particular optical detector, of the set of optical detectors (140), receiving the quantum encoded photon (150; 215; 310);
determine, based on the measurement setting information (155; 220; 315) and the detector information (160; 225; 320), measurement information (165; 230; 325); and
transmit the measurement information (165; 230; 325) to the first QPV verification device (110).

6. The QPV prover device (105) of claim 5, wherein:
the measurement setting information (155; 220; 315) identifies whether one of a pair of optical detectors (140-1, 140-2, 140-3, 140-4), of the set of optical detectors (140-1, 140-2, 140-3, 140-4), is expected to receive the quantum encoded photon (150; 215; 310),
wherein the pair of optical detectors (140-1, 140-2, 140-3, 140-4) are positioned to receive the quantum encoded photon (150; 215; 310) when the quantum encoded photon (150; 215; 310) exits from respective output portions of the PBS (130) or from respective output portions of the other PBS (135).

7. The QPV prover device (105) of claim 5, wherein:
the measurement setting information (155; 220; 315) identifies whether the set of optical detectors (140-1, 140-2, 140-3, 140-4) is expected to receive the quantum encoded photon (150; 215; 310) within a first time window or a second time window that follows the first time window.

8. The QPV prover device (105) of claim 5, wherein:
the measurement setting information (155; 220; 315) identifies whether the set of optical detectors (140-1, 140-2, 140-3, 140-4) are expected to receive the quantum encoded photon (150; 215; 310) within a first time window or either one of a second time window that follows the first time window or a third time window that follows the second time window.

9. The QPV prover device (105) of claim 5, wherein:
the measurement information (165; 230; 325) indicates whether one of a pair of optical detectors (140-1, 140-2, 140-3, 140-4), of the set of optical detectors (140-1, 140-2, 140-3, 140-4), that is expected to receive the quantum encoded photon (150; 215; 310), as indicated by the measurement setting information (155; 220; 315), successfully received the quantum encoded photon (150; 215; 310).

10. The QPV prover device (105) of claim 5, wherein:
the measurement information (165; 230; 325) indicates whether the set of optical detectors (140-1, 140-2, 140-3, 140-4) received the quantum encoded photon (150; 215; 310) within a time window indicated by the measurement setting information (155; 220; 315).

11. A method (500), comprising:
obtaining (510), by a processing component (145) of a quantum position verification, QPV device (105), measurement setting information (155; 220; 315);
obtaining (520), after obtaining the measurement setting information (155; 220; 315), detector information (160; 225; 320) from a set of optical detectors (140-1, 140-2, 140-3, 140-4) of the QPV device (105) and based on the set of optical detectors (140-1, 140-2, 140-3, 140-4) detecting a quantum encoded photon (150; 215; 310) that is received by a non-polarizing beam splitter, NPBS, (120) of the QPV device (105) and propagated to the set of optical detectors (140-1, 140-2, 140-3, 140-4) via at least one of a fixed rotator component (125) or a polarizing beam splitter, PBS, (130) of the QPV device (105);
determining (530), based on the measurement setting information (155; 220; 315) and the detector information (160; 225; 320), measurement information (165; 230; 325); and
transmitting (540) the measurement information (165; 230; 325).

12. The method (500) of claim 11, wherein:
the measurement setting information (155; 220; 315) identifies whether a pair of optical detectors (140-1, 140-2, 140-3, 140-4), of multiple pairs of optical detectors of the set of optical detectors (140-1, 140-2, 140-3, 140-4), is expected to receive the quantum encoded photon (150; 215; 310).

13. The method (500) of claim 11, wherein:
the measurement setting information (155; 220; 315) identifies whether the set of optical detectors (140-1, 140-2, 140-3, 140-4) is expected to receive the quantum encoded photon (150; 215; 310) within a first time window or a second time window that follows the first time window.

14. The method (500) of claim 11, wherein:
the measurement information (165; 230; 325) indicates whether a pair of optical detectors (140-1, 140-2, 140-3, 140-4) of multiple pairs of optical detectors of the set of optical detectors (140-1, 140-2, 140-3, 140-4), that is expected to receive the quantum encoded photon (150; 215; 310), as indicated by the measurement setting information (155; 220; 315), successfully received the quantum encoded photon (150; 215; 310).

15. The method (500) of claim 11, wherein:
the measurement information (165; 230; 325) indicates whether the set of optical detectors (140-1, 140-2, 140-3, 140-4) received the quantum encoded photon (150; 215; 310) within a time window indicated by the measurement setting information (155; 220; 315).
